# EUROPEAN PATENT APPLICATION

(11) **EP 1 605 618 A1**
(43) Date of publication of application: **14.12.2005**
(21) Application number: 04291464.8
(22) Date of filing: 11.06.2004
(51) Int. Cl.: H04J 3/16, H04J 3/06, H04L 12/56

(54) **Bandwidth optimization in transport of Ethernet frames**

(71) Applicant: ALCATEL, 75008 Paris (FR)
(72) Inventor: Maggi, Donato, 23841 Annone di Brianza (Lecco) (IT); Pozzoli, Elena, 20034 Giussano (Milano) (IT); Ricciardi, Carmela, 20015 Parabiago (Milano) (IT); Taina, Paolo, 20059 Vimercate (Milano) (IT)
(74) Representative: Menzietti, Domenico

(57) **Abstract**

A method is described for optimizing the transport of Ethernet frames in a telecommunication network over different connections having different delays, in order to avoid overflow of the receiving queues. The method includes measuring of the delays of the connections, collecting the values of the delays, defining a range of valid values, comparing the values of the delays to the defined range and carrying the Ethernet frames over the connections having the values of the delays within the defined range.

## Description

### Field of the invention:

The present invention relates to the telecommunication field and more in particular to the transport of Ethernet frames over a SDH/SONET/OTN network. Still more in particular, the invention concerns to a method for optimizing the transport of Ethernet frames carried between two network elements over several connections having different delays.

### Background of the invention:

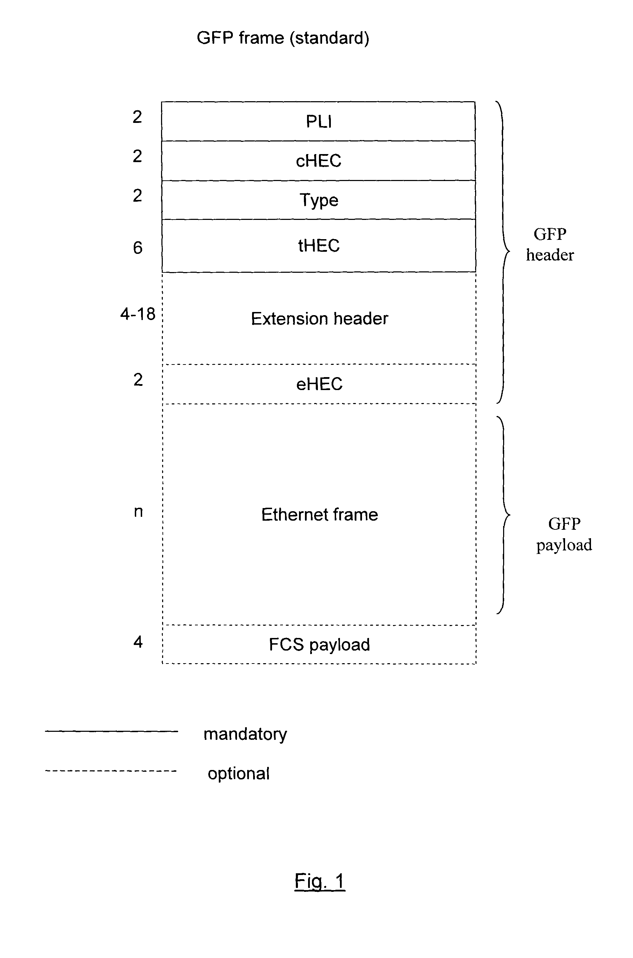

Ethernet frames are carried in a telecommunication network according to encapsulation into GFP (Generic Frame Procedure) frames, as defined by International Telecommunication Union (ITU) in ITU-T G.7041/Y.1303 (12/2001). Referring to Fig.1, a GFP frame includes a payload field for carrying the Ethernet frame (without the Preamble and the Start of Frame Delimiter) and an header field. Some fields are mandatory and are indicated with a unbroken line, other fields are optional and are indicated with a broken line. An Ethernet frame has a variable length and consequently a GFP frame encapsulating an Ethernet frame has a variable length. The PLI (Payload Length Indicator) field in the GFP header contains a number representing the number of bytes in the GFP payload field. In case there is no Ethernet frame to carry (no client data), PLI=0 and the GFP frame includes only the header field: this is an idle Control frame. The number of bytes of each field is shown on the left; the payload field has a variable length and can include from 0 (idle Control frame) to 65535 bytes. The GFP frames are subsequently carried into Virtual Containers (VCs) of a Synchronous Digital Hierarchy (SDH) network or into Virtual Tributaries of a Synchronous Optical NETwork (SONET) or into Optical Channels of an Optical Transport Network (OTN).

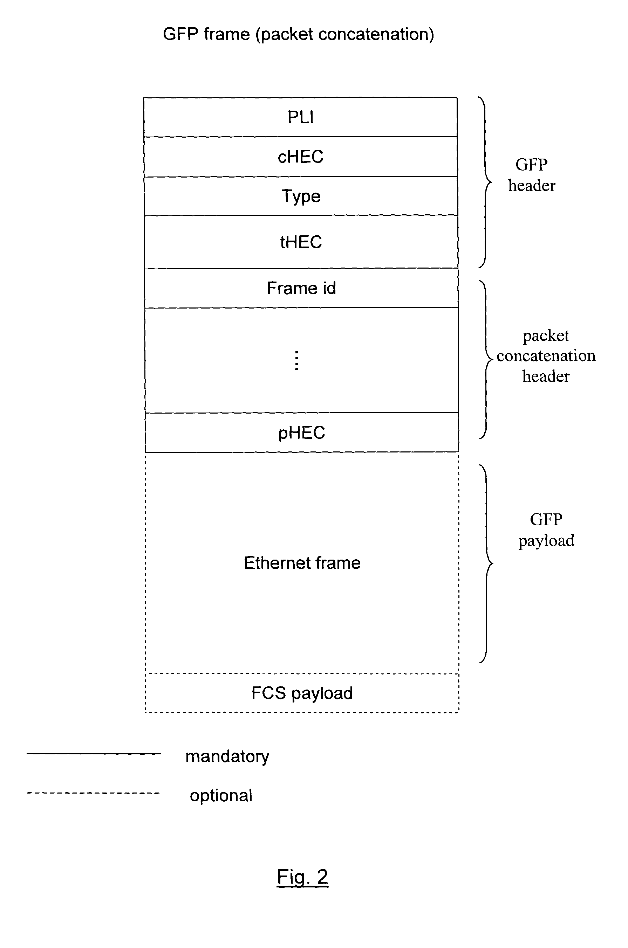

EP1339198 discloses a method, defined "packet concatenation", for optimizing transport of Ethernet frames over different connections in an SDH network mapping the GFP frames into VCs; the advantages of this method are a better bandwidth utilization and a better protection from the failure of a connection. According to this solution, the Ethernet frames are carried from a first network element to a second network element over several connections following different routes; each connection carries VCs, also of different type (for example a VC4 over a first connection and a VC12 over a second connection). One GFP frame is mapped into one VC and each VC can include more than one GFP frame, depending on the size of the GFP frame (which in turn depends on the size of the Ethernet frame) and of the VC (VC4, VC3, VC12). The VC selected for carrying a GFP frame is frame by frame based, i.e. it is not related neither to the last selection nor to the status of the received frames. The diverse routing is required for protecting the traffic and for delivering the maximum bandwidth. Referring to Fig.2, a packet concatenation field in the header field is required in the GFP frame for managing the packet concatenation mapping. Since each connection follows a different route, the connections can have different delays. The packet concatenation field of the GFP frame includes a frame identifier (FRAME_ID in Fig.2) assigned at the transmitting side and elaborated at the receiving side in order to recover at the receiving side the same order of the transmission side. Moreover at the receiving side a queue is required for each connection, in order to store the GFP frames mapped into the VCs carried over the connections having the highest delays. The reasons of the different delays of the connections can be static parameters, like different physical routes in the network and different bandwidth, and dynamic one, like traffic congestion on a connection. In case of a connection having a big delay compared to the others one, it could happen to have an overflow of one or more queues of the connections having the smallest delays. Alternatively, a defined period of time (timeout) is waited for the slowest connection and if frames are not received in the defined period, the frames stored in the queues of the other connections are discarded. In both cases loss of frames occurs.

A possible solution to avoid queues overflow is to perform flow control, as described in EP1339185: when the filling of the queues reaches a danger level, the receiving side assigns a bit in the GFP frame in order to advise the transmitting side to stop the transmission of the frames. According to this solution, data is not lost but there is a degradation of the quality of the service because bandwidth is drammatically reduced in case the transmission is stopped for many connections having big delays.

### Summary of the invention:

In view of the drawbacks and deficiencies of the known and standardized solutions, as described above, the main object of the present invention is to provide a method for avoiding overflow of the receiving queues storing frames carried over different connections having different values of delays; this is achieved by a method according to claim 1. The basic idea is to measure the delays of the connections, to collect the values of the measured delays, to define a range of valid values of delays and to transmit the frames over the connections having the delays within the defined range. This solution allows to avoid overflow of the queues because it prevents the filling above the danger value.

A correlated advantage is the automatic restoring of the maximum bandwidth available from the connections; this is achieved by a method according to claim 4. A further object is to define a range of valid values of delays according to delay optimization or bandwidth optimization; this is achieved by a method according to claims 5 and 6.

### Brief description of the drawings:

Fig.1 and Fig.2 relate to prior art.
Fig.1 shows schematically the GFP frame according to ITU-T G.7041/Y.1303 (12/2001).
Fig.2 shows schematically the GFP frame according to packet concatenation.
Fig.3 shows two network elements performing the inventive method and the bits in the header fields of the GFP frames over a forward and a backward connection for measuring the delay of the forward connection and for indicating the status of the connection.
Fig.4 shows more in detail the transmitter of network element A of Fig.3.

### Best mode for carrying out the invention:

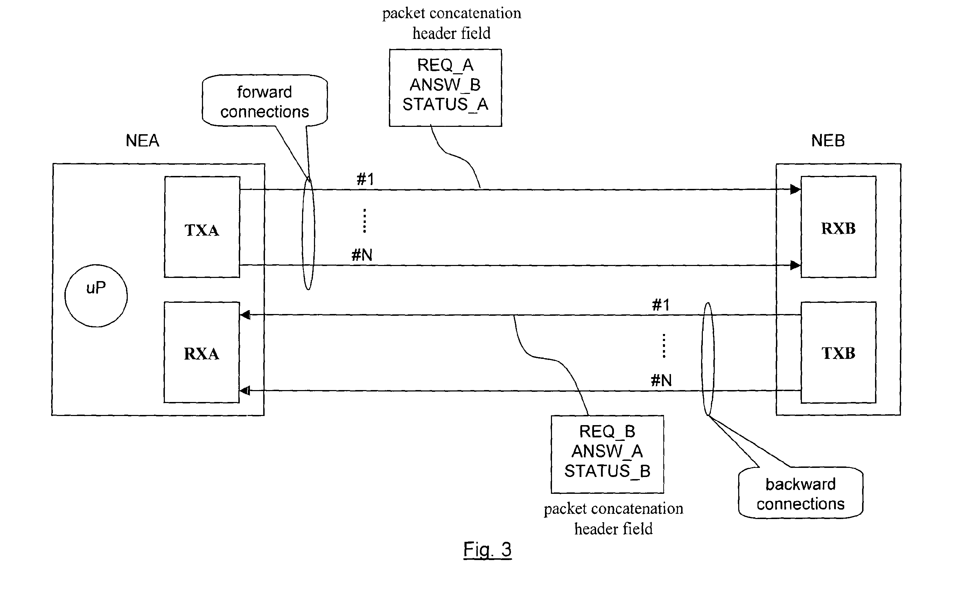

Fig.3 shows a first preferred embodiment including two network elements, NEA and NEB, performing the inventive method; each network element includes a transmitter (TXA and TXB) for transmitting the frames and a receiver (RXA, RXB) for receiving the frames and NEA also includes a microprocessor. NEA and NEB are two end network elements, i.e. network elements at the end of the connections, but intermediate network elements can be placed between NEA and NEB: in this case a connection is divided into connection segments, each segment connecting two network elements. At least two forward connections, following different routes, are provided from NEA to NEB and usually the same number of connections from NEB to NEA (bidirectional connections). Ethernet frames are transmitted over the connections from NEA to NEB and viceversa, according to encapsulation into GFP frames and mapping into VCs of an SDH network according to packet concatenation. A GFP frame includes the header field including in the packet concatenation field some bits for managing the calculation of the delay of a connection. The GFP frame always includes the header field for continually monitoring the delay of the connection and can also include a payload field for carrying the Ethernet frame (in general the client data). The calculation of the delay of a forward connection can be performed using two bits in the header field: the first bit, indicated in Fig.3 with REQ_A, is in the header field of the GFP frame over the forward connection and the second bit, indicated in Fig.3 with ANSW_A, is in the header field of the GFP frame over the correspondent backward connection (the suffix A is for indicating that the invention is performed at network element A). The first bit is a request transmitted to NEB indicating, for example setting this first bit to "1", the calculation of the delay of the forward connection; at the same time at NEA is activated for example a timer for measurement of the delay of the forward conenction. When the request is received by NEB, the second bit is transmitted to NEA over the correspondent backward connection as an answer to the request, for example setting this second bit to "1 "; the backward connection used for the answer is usually on the same route of the forward connection used for the request. When the answer is received by NEA, the timer is stopped: the value of the timer indicates the sum of the delays of the forward and backward connections. The delay of the forward connection is calculated dividing this value by 2: this is an indication of the mean delay of the forward connection. The same measurement is performed for each forward connection from NEA to NEB, for example using a microprocessor at NEA performing the delay measurements according to a polling mechanism, i.e. periodically (for example every 20 ms) activates the measure on subsequent forward connections. When the values of the delays of all the forward connections are available, the microprocessor compares periodically (for example every 5 s) the values to a defined range of valid values. In case a forward connection has a value of the delay out of the range, Ethernet frames transmitted from NEA to NEB are not mapped into the payload field of GFP frames over this forward connection, which carries a GFP frame including only the header field. The bandwidth available for transmission of frames is reduced, but only by a small value, because only few connections are removed from the forward connections used for carrying the Ethernet frames. Since the backward connection correspondent to the removed forward connection usually follows the same route, it is also required to remove the correspondent backward connection from the backward connections used for carrying the Ethernet frames, because it is likely that this backward connection has a delay out the range. This is performed assigning a third bit, indicated with STATUS_A in Fig.3, in the header field of the frame over the forward connection for indicating the status of the connection, in order to advise NEB that this forward connection has the value of the delay out of the range and that NEA has removed the transmission of Ethernet frames over this forward connection; the third bit is assigned, for example setting this third bit to "1", when NEA receives the second bit indicating the answer to the request. When NEB receives the third bit set to "1", also the correspondent backward connection is removed from the backward connections used for carrying the Ethernet frames and subsequent Ethernet frames are not mapped into the payload field of GFP frames over this backward connection, so that the correspondent backward connection carries a GFP frame including only the header field.

The GFP frame including only the header field over a connection having the delay out of the range is required for continually monitoring the delay of the connection, in order to automatically restore the transmission of Ethernet frames over this connection when the value of the actual delay previously out of the range is within the range. In this case, NEA restores the transmission of GFP frames including Ethernet frames over this connection and transmits STATUS_A = "0", in order to advise NEB of the change of the status of the forward connection. When NE receives this indication, it restores the transmission of GFP frames including Ethernet frames also over the correspondent backward connection.

NEB is also allowed to send a request to NEA to remove the transmission of Ethernet frames from a backward connection and consequently NEA will remove the transmission of Ethernet frames over the correspondent forward connection. In this case NEB sends the request to NEA assigning a first bit (indicated in Fig.3 with REQ_B) in the GFP frame over the backward connection; NEA answers to the request assigning a second bit (indicated in Fig.3 with ANSW_B) in the GFP frame over the correspondent forward connection. Finally, NEB assigns a third bit (indicated in Fig.3 with STATUS_B) for indicating to NEA that this backward connection has the value of the delay out of the range and that NEA has removed the transmission of Ethernet frames over this backward connection, so that NEA can remove the transmission over the correspondent forward connection.

The range of valid values of delays can be defined according to delay optimization or bandwidth optimization. In the first case, the smallest value of the delays is taken as the lower bound and a predefined maximum value is taken as the upper bound. The maximum value depends on the size of the queues at the receving side: a big queue can store many frames and consequently a big maximum value can be accepted. The maximum value depends also on the bit rate of the connections. For example, the maximum value is 41 ms for a connection carrying VC12 and 3.6 ms for VC3: in case of VC12 a connection having a delay of 50 ms will carry GFP frames including only the header field; when this delay becomes smaller or equal 41 ms, the connection will carry GFP frames including also the payload field. This solution is simple but is not optimized for bandwidth: in the second case the range is calculated in order to have the maximum bandwidth available for carrying the Ethernet frames. The width of the range is calculated according to the same considerations as the maximum value of the first case. As an example, suppose to have 6 connections carrying VC12 having the following values of delays: 5 ms, 30 ms, 40 ms, 45 ms, 50 ms, 55 ms. According to delay optimization, the range is comprised between 5 ms (the minimum value of the delays) and 41 ms (the predefined maximum value for VC12): the range includes 3 connections, having values 5 ms, 30 ms and 40 ms, and the bandwidth available for transmission of Ethernet frames is 3 VC12. In bandwidth optimization, comparing in the same condition of a range wide 36 ms (41-5= 36), this range is shifted (like a window) in order to comprise the maximum number of connections. A simple algorithm can be in the first step to assign to the lower bound the smallest value of the delays (5 ms) and to the upper bound the sum of the lower bound and a predefined value (the width of the range, 36 ms in the example): this range, comprised between 5 ms and 41 ms, includes 3 connections having values of the delays of 5, 30 and 40 ms. In the second step the first value of the delay bigger than the smallest one is assigned to the lower bound, i.e. 30 ms is assigned to the lower bound, and the sum of the lower bound and the width of the range is assigned to the upper bound: this range, comprised between 30 ms and 66 ms, includes 5 connections having values of the delays of 30, 40, 45, 50 and 55 ms. This algorithm can be iterated for each value of the measured delays. The range comprised between 30 ms and 66 ms includes the maximum number of connections (5) and the bandwidth is 5 VC12, greater than 3 VC12 according to delay optimization. The same method is used in bandwidth optimization when the connections carry different VCs, for example VC4 and VC12. The bandwidth of a VC4 is 63 times the bandwidth of a VC12 and a connection carrying VC4 is preferred to one or more connections carrying VC12.

In the first preferred embodiment the first frame is Ethernet, the second is GFP and GFP frames are mapped into VCs of a SDH network. The same method can be used for different types of the first frame and different types of the second frame. Moreover, the second frame can be carried in a network different from SDH. For example, GFP mapping is used for encapsulating frames having variable length, like Fast Ethernet, Gigabit Ethernet, 10Gigabit Ethernet and IP, or fixed length, like Fibre Channel, Escon and Ficon, and a GFP frame can also be mapped into one Virtual Tributary of a SONET network or into one Optical Channel of an OTN network.

In a second preferred embodiment the delay of a forward connection can be calculated using a timestamp label in the header field of the GFP frame over the forward connection. In this solution, NEA and NEB are synchronized to a common time reference; this common time reference can be a clock distributed in the network by a master network element or by a network management system. NEA sends the timestamp label which includes for example the date and the time of the transmission of the GFP frame. NEB has the information, synchronized with NEA, of the actual date and time and can compare this information to the label in the header field of the GFP frame received from NEA: the difference is an indication of the delay of the forward connection. In this second embodiment NEB assigns the status bit (STATUS_B) for advising NEA that the connection has the value of the delay out of the range and at the same time NEB removes the transmission of Ethernet frames over this connection. When NEA receives the indication of the third bit, it also remove the transmission of Ethernet frames over the connection in the correspondent opposite direction.

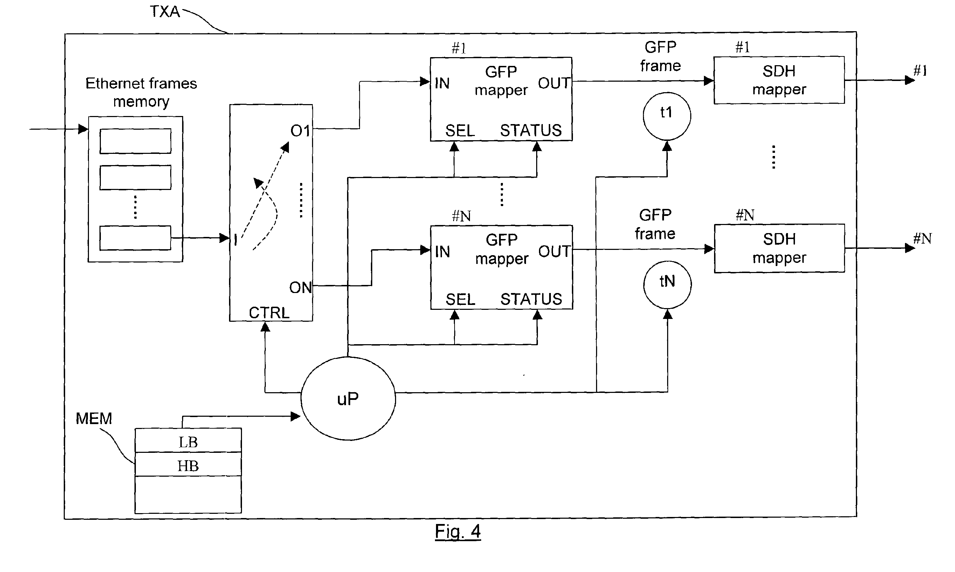

The method can be advantageously implemented on a network element, for example an Add-Drop Multiplexer (ADM), including hardware devices like an Application Specific Integrated Circuit (ASIC), Field Programmable Gate Array (FPGA), microprocessor or memories. Fig.4 shows more in details the transmitter TXA of Fig.3; the microprocessor (uP) can be in the same block of the transmitter, like shown in Fig.4, or can be a different device connected to the transmitter. For example in the first case one FPGA can include both an embedded microprocessor and digital logic performing the functions of the transmitter (and usually also of the receiver).

Ethernet frames are received from at least one Ethernet interface, for example from an Ethernet switch, and are stored in a memory, required because the Ethernet traffic is bursty. The memory can be a FIFO (First In First Out), having one input and one output. The output of the memory is connected to the input of a switching device able to forward a stored Ethernet frame to one of the outputs, having one output for each forward connection. The switching device has a second input CTRL controlled by the microprocessor: depending on the value of the delays of the forward connections, the microprocessor is responsible for the choice of the output for the transmission of the stored Ethernet frame. The stored Ethernet frames are forwarded only to the outputs of the switching device related to the connections having value of delays within the range. Each output of the switching device is connected to a first input of a GFP mapper, which is responsible to build the GFP frame, adding the header field and transmitting to the output (OUT) the GFP frame including the header field and the Ethernet frame in the payload field or transmitting to the output the GFP frame including only the header field: the first case is for the GFP mapper related to the connections having the delays within the range and the second is for the GFP mapper related to the connections having the delays out of the range. Each GFP mapper has a second input (SEL) controlled by the microprocessor, for the choice of the GFP frame to transmit, and a third input (STATUS) controlled by the microprocessor for setting the bit STATUS_A for indicating the status of the forward connection (within or out of the range). The output of the GFP mapper is connected to the input of a SDH mapper, performing the mapping of the GFP frame into the VC4 according to packet concatenation. In case the calculation of the delays is performed using two bits (REQ_A, ANSW_A) in the header fields, the network element includes counting means, like timers t1...tN, to perform the measurement of the delays of the forward connections; the timers are connected to the microprocessor, which is responsible to activate a timer when the request (REQ_A) of the related connection is transmitted, to stop the timer when the answer (ANSW_A) of the correspondent backward connection is received, to collect the values of the timers of the forward connections and to compare the values to the defined range. Finally a memory is required for storing the lower and upper bound of the range.

The method can be implemented in a preferred embodiment through or together with a software program like Very high speed integrated circuit Hardware Description Language (VHDL) mapped into an ASIC (Application Specific Integrated Circuit) or FPGA (Field Programmable Gate Array) or C language running on a microprocessor, by one or more VHDL processes or C routines/tasks. The software program running on a microprocessor thus includes for example a first task for collecting the values of the measured delays according to a first polling mechanism, comparing the values of the measured delays respect to the defined range and selecting the forward connections having the values of the measured delays within the range and the forward connections having the values of the measured delays out of the range and includes a second task for measuring the delays of the forward connections according to a second polling mechanism.

## Claims

1. Method for carrying frames of digital signals in a telecommunication network,
- each frame being a first frame (Ethernet frame) encapsulated into a second frame (GFP frame), the second frame including an header field and an optional payload field, the first frame being mapped into the payload field;
- the second frames being carried from a first network element (NEA) to a second network element (NEB) over at least two forward connections following different routes and from the second network element (NEB) to the first network element (NEA) over at least two backward connections following different routes;
the method including measuring of the delays of the forward connections,
the method being **characterized by** collecting the values of the delays, comparing the values respect to a defined range of valid values and carrying the second frames including header fields and payload fields with encapsulated first frames over the forward connections having the values of the delays within the range and the second frames including only header fields over the forward connections having the values of the delays out of the range, the header fields carrying information for performing the measuring of the delays of the forward connections.

2. Method according to claim 1, **characterized by** continuously measuring of the delays of the forward connections, assigning in the header fields of the second frames over the forward connections at least a first bit (REQ_A) for indicating a request of calculation of delays of the forward connections and assigning in the header fields of the second frames over the correspondent backward connections at least a second bit (ANSW_B) for indicating an answer to the request, activating the measuring of the delays of the forward connections when the request is transmitted and stopping the measuring when the answer is received.

3. Method according to claim 2, **characterized by** assigning in each header field of the second frames over the forward connections at least a third bit (STATUS_A) for indicating the status of the connections and carrying, dependent on the status, the second frames including payload fields with encapsulated first frames over backward connections correspondent to the forward connections having the values of the delays within the range or the second frames including only header fields over backward connections correspondent to the forward connections having the values of the delays out of the range.

4. Method according to claim 2, **characterized by** additionally carrying the second frames including header fields and payload fields over those forward connections where actual delays previously out of the range are within the range.

5. Method according to claim 1, wherein the lower bound of the range is the smallest value of the measured delays of the forward connections and the upper bound of the range is a predefined maximum value.

6. Method according to claim 1, **characterized by** assigning to the upper bound of the range the sum of the lower bound and a predefined value, the lower bound being calculated from the measured delays in order to have the maximum number of forward connections having the values of the delays within the range.

7. Method according to claim 1, wherein the second frames are Generic Frame Procedure frames.

8. Method according to claims 1 or 7, wherein the first frame is an Ethernet frame.

9. Method according to claims 1 or 7, wherein the connections carry Virtual Containers of a SDH network or Virtual Tributaries of a SONET network or Optical Channels of an OTN network and each second frame is mapped into one Virtual Container or into one Virtual Tributary or into one Optical Channel respectively.

10. Frame to carry digital signals in a telecommunication network over different connections,
- the frame being a second frame (GFP frame) encapsulating a first frame (Ethernet frame), the second frame including an header field and an optional payload field, the first frame being mapped into the payload field;
- the second frames being transmitted from a first network element (NEA) to a second network element (NEB) over at least two forward connections following different routes and from the second network element (NEB) to the first network element (NEA) over at least two backward connections following different routes;
**characterized in that** the header fields carry at least a third bit (STATUS_A) for indicating if the forward connections have values of delays within or out of a defined range.

11. Frame according to claim 10, **characterized in that** the header fields carry information for measuring delays of the forward connections, the header fields of the second frames carried over the forward connections including at least a first bit (REQ_A) for indicating a request of calculation of delays of the forward connections, the header fields of the second frames over correspondent backward connections including at least a second bit (ANSW_A) for indicating an answer to the request.

12. Network element including hardware means adapted to perform the method according to claim 1, the means including:
- storing means (Ethernet frames memory) to store the first frames, having at least one input to receive the first frames and one output to transmit the stored first frames;
- switching means having a first input (I) to receive the stored first frames from the output of the storing means, having an output (O1, ON) for each forward connection and having a second input (CTRL) to select the outputs, the switching means forwarding the input to one output (O1, ON) depending on the second input value;
- a number of transmitters (GFP mapper #1, #N) for each forward connection, each transmitter having a first input (IN) connected to one output of the switching means, having an output (OUT) to transmit the second frames over the forward connection, having a second input (SEL) to select the transmission of the input (IN) or to select the transmission of the second frames including only the header field and having a third input (STATUS) for assigning at least a third bit (STATUS_A) indicating the status of the connection;
- a microprocessor (uP) connected to the input (CTRL) of the switching means and to the second (SEL) and third (STATUS) inputs of the transmitters, controlling the switching means to forward the first frames to the transmitters of the forward connections having the values of the delays within the range and controlling the transmitters of the forward connections having the values of the delays out of the range.

13. Network element according to claim 12, the means including:
- counting means (t1, tN) to perform measuring of the delays of the forward connections;
- a memory MEM) connected to the microprocessor to store the lower bound (LB) and the upper bound (UB) of the range;
- the microprocessor (uP) connected to the counting means to activate, stop, collect the measuring of the delays and compare the values of the delays respect to the range.

14. Software program comprising software program code means adapted to perform part of the steps of the method according to claim 1 when the program is run on a hardware (uP), the program including a first task for selecting the forward connections having the values of the delays within the range and the forward connections having the values of the delays out of the range.

15. Software program according to claim 14, the program including:
- a second task for measuring the delays of the forward connections according to a second polling mechanism;
- the first task additionally collecting the values of the delays according to a first polling mechanism and comparing the values of the delays respect to the range.
